# EUROPÄISCHE PATENTSCHRIFT

(11) **EP 0 605 459 B1**
(45) Veröffentlichungstag und Bekanntmachung des Hinweises auf die Patenterteilung: **12.04.1995**
(21) Anmeldenummer: 92918640.1
(22) Anmeldetag: 02.09.1992
(51) Int. Cl.: B62D 55/088

(54) **RAUPENFAHRZEUG**
CRAWLER VEHICLE
VEHICULE A CHENILLES

(30) Priorität: 25.09.1991 DE 4131853; 26.06.1992 DE 4220941
(43) Veröffentlichungstag der Anmeldung: 13.07.1994
(73) Patentinhaber: O&K ORENSTEIN & KOPPEL AG, 13581 Berlin (DE)
(72) Erfinder: LAPPE, Manfred, D-5840 Schwerte 4 (DE)
(86) Internationale Anmeldenummer: EP9202018
(87) Internationale Veröffentlichungsnummer: WO9305997

(56) Entgegenhaltungen:
- DE-A- 3 310 286
- DE-B- 659 477
- US-A- 2 637 603
- US-A- 4 198 103

## Beschreibung

Die Erfindung betrifft ein Raupenfahrzeug, wie insbesondere Hydraulikbagger, Schaufelradbagger oder dgl., mit um Leit- und Kettenräder sowie Lauf- und Stützrollen geführten, mit Kettengliedern versehenen, spannbaren Fahrketten sowie mindestens einem am Rahmen der Fahrketten gelagerten sich bis in den Bereich der Kettenglieder erstreckenden Kettenräumer.

Bei Raupengeräten mit sich jeweils an den Bodenplatten der Fahrketten befindlichen Kettengliedern füllen sich während verschiedener Fahrmanöver, wie z.B. Kurvenfahrten, Drehen auf der Stelle durch gegenläufiges Fahren oder dgl., die Kettenglieder sowie die damit zusammenhängenden Bereiche mit Erdreich, Schneematsch oder dgl.

Nur durch Geradeausfahrten von mindestens einer Fahrkettenlänge oder wechselseitiges freies Durchdrehen der Fahrketten, indem das Fahrwerk jeweils einseitig durch Abstützen auf einer Ausrüstung angehoben wird, ist eine Reinigung der Kettenglieder möglich.

Bei bestimmten Rüstzuständen der Geräte und Baustellensituationen ist diese ansonsten zeitaufwendige Fahrkettenreinigung nicht durchführbar, so daß durch häufige geringe Positionsveränderungen der Raupengeräte permanent Erdreich, wie Sand, Lehm, Gestein oder dgl., in die Kettenglieder gelangt, das durch das Kettenrad, das Leitrad sowie die Laufrollen in den Kettengliedern extrem verfestigt wird. Selbst im Zahngrund des Kettenrades baut sich nach und nach Erdreich , wie Sand, Ton, Mergel oder dgl. auf. Wird das Raupenfahrzeug in diesem Zustand geradeaus verfahren, sind die Zahne des Kettenrades nicht in der Lage, das verfestigte oder gefrorene Erdreich durch die in den Kettengliedern und Bodenplatten vorhandenen Durchbrüche zu verdrängen.

Es kommt somit zwangsläufig zu einer fiktiven Radiusvergrößerung bzw. Umfangsverlängerung der Fahrkette im Bereich des Kettenrades, was zu einem Einfedern des Leitrades bis auf Federblock führt. Die Folge ist, daß auf den Kettenspannzylinder große Kräfte wirken, die zu Überlastungen des Stahlbaus, des Antriebes, der Fahrketten, der Leitradeinrichtung sowie der Spannzylinder führen.

Es ist prinzipiell zwar möglich, eine Druckabsicherung des Kettenspannzylinders vorzunehmen, wobei dieser nach Einfedern des Leitrades bis auf Federblock dann durch Abspritzen des Fettes ebenfalls bis auf Block einfahren kann, eine Überlastung der oben genannten Bauteile aber nicht verhindern würde. Abgesehen von der Umweltverschmutzung und der zeitintensiven Fettzufuhr mit dem damit verbundenen Druckaufbau im Kettenspannzylinder, würde jedoch ein Einfahren des Kettenspannzylinders zu einem unerwünscht großen Einfahrweg des Leitrades - Federweg plus Spannzylinderweg - führen. Daraus resultiert wiederum die Gefahr, daß die Fahrkette vom Fahrwerk abspringen kann.

Die DE-A 33 10 286 betrifft einen Schmutzabweiser für Raupenketten, insbesondere für Baumaschinen, der zwischen den rechten und linken Kettengliedern eingebaut ist. Der Schmutzabweiser ist an beiden Seiten in Richtung der Kettenlänge dem Radius der Laufrollen bzw. dem Antriebsrad angepaßt und taucht mit seiner unteren Seite in die linken und rechten Kettenglieder bis kurz über die Kettenbuchsen ein. Der Schmutzabweiser kann mit dem Laufwerksrahmen verschraubt oder verschweißt sein und kann aus verschiedenen Werkstoffen bestehen. Durch die Keilausführung des bzw. der Schmutzabweiser, der bzw. die die Laufrollen teilweise umfassen, soll eindringender Schmutz wieder nach außen befördert und gleichzeitig das Eindringen von Schmutz beim Schwenken der Maschine verhindert werden. Nachteilig an dieser Konstruktion ist festzustellen, daß zur Erlangung dieser Vorteile eine Vielzahl von Schmutzabweisern vonnöten sind, die infolge ihrer starren Verlagerung am Rahmen von den ständig infolge von Bodenunebenheiten ausweichenden Bodenplatten in axialer Richtung stoßartig beaufschlagt werden. Ferner nachteilig ist die geometrische Form anzusehen, bei der von oben herabfallender Schmutz oder Gestein sich in den Spalt zwischen dem Schmutzabweiser und der zugehörigen Laufrolle setzt und diese schließlich so festsetzt, daß keine rollende sondern nur noch eine gleitende Bewegung auf der Kette möglich ist.

Das dem Erfindungsgegenstand zugrunde liegende Ziel ist darin zu sehen, das im gattungsbildenden Teil des ersten Patentanspruches beschriebene Raupenfahrzeug dahingehend weiterzubilden, daß sich die Kettenglieder und die ggf. damit zusammenwirkenden Bereiche auch bei nur sporadischen und geringen Positionsveränderungen des Raupenfahrzeuges nicht mit Erdreich, Eis, Schneematsch oder anderweitigem Schmutz zusetzen und somit die Betriebssicherheit gefährden können, wobei die Beweglichkeit der Laufrollen in jedem Betriebszustand des Raupenfahrzeuges gewährleistet werden soll.

Dieses Ziel wird erfindungsgemäß dadurch erreicht, daß der Kettenräumer einen sich in Richtung des Rahmens erstreckenden bolzenförmigen Ansatz aufweist, der innerhalb einer mit dem Rahmen fest verbundenen Hülse axial beweglich geführt ist, und daß die Schneide bzw. die Schneiden des Kettenräumers mit vorgegebenem Abstand oberhalb der Kettenbolzen vorgesehen ist bzw. sind.

Vorteilhafte Weiterbildungen des Erfindungsgegenstandes sind den Unteransprüchen zu entnehmen.

Der Kettenräumer wird durch eine am Rahmen befestigte Hülse geführt und befindet sich ständig durch Eigengewicht oder Federkraft in Kontakt mit den Kettengliedern. Der Kettenräumer wird bei Abheben der Laufrollen von der Fahrkette automatisch nachgeführt und gewährleistet, daß die Kettenglieder bis zu den Kettenbolzen optimal vom Erdreich, wie Sand, Ton, Gestein oder Eis, befreit werden können. Der Kettenräumer wird nur durch einen Spannstift, Bolzen oder ähnliches Befestigungs- oder Sicherungselement gesichert und kann somit bei Verschleiß schnell ausgetauscht werden. Mittels des erfindungsgemäßen Kettenräumers kann auch bereits verfestigtes oder gefrorenes Erdreich oder Schneematsch aus den Kettengliedern problemlos entfernt werden, da der Kettenräumer eine im wesentlichen abschälende oder abscherende Wirkung zwischen den Kettengliedern oberhalb der Kettenbolzen bewirkt.

Infolge seiner automatischen Nachführung verhindert der Kettenräumer ein Abspringen der Laufkette und kann bei entsprechender Anordnung vor Leit- und/oder Kettenrad die bislang starren Kettenführungen, die jeweils rechts und links der Kettenglieder fest am Rahmen angebracht sind, ersetzen. Durch diese Maßnahme kann eine nicht unerhebliche Kosteneinsparung herbeigeführt werden.

In gleicher Weise wird durch den Kettenräumer der Stahlbau, die Fahrketten, die Leitradeinrichtung einschließlich Federpakete und Spannzylinder sowie die Antriebseinheit vor Überlastungen gesichert. Darüber hinaus wird durch den Kettenräumer eine Radiusvergrößerung der Fahrkette im Bereich des Kettenrades und somit eine Zugkraftverminderung verhindert. Gleichzeitig wird der Verschleiß der Fahrketten, der Antriebseinheit, der Lauf- und Stützrollen sowie der Leitradeinrichtung reduziert.

Der Kettenräumer besteht vorzugsweise aus dem gleichen oder einem ähnlichen Material wie die Arbeitswerkzeuge, die an den Schaufeln beispielsweise von Hydraulikbaggern befestigt sind. Als bevorzugtes Material kommt ein hoch verschleißfester Werkstoff, wie z.B. 28 CrSiMo 865, zum Einsatz, wobei es sich aus Kostengründen anbietet, den Kettenräumer als Gußteil auszuführen.

Der Erfindungsgegenstand ist nicht nur auf Hydraulik- und Schaufelradbagger beschränkt, vielmehr können sämtliche mit Fahrketten ausgerüstete Fahrzeuge, wie z.B. Schneeräumer, Geländefahrzeuge oder dgl., mit dem Kettenräumer versehen werden.

Die Erfindung ist anhand eines Ausführungsbeispieles in der Zeichnung dargestellt und wird wie folgt beschrieben. Es zeigen:

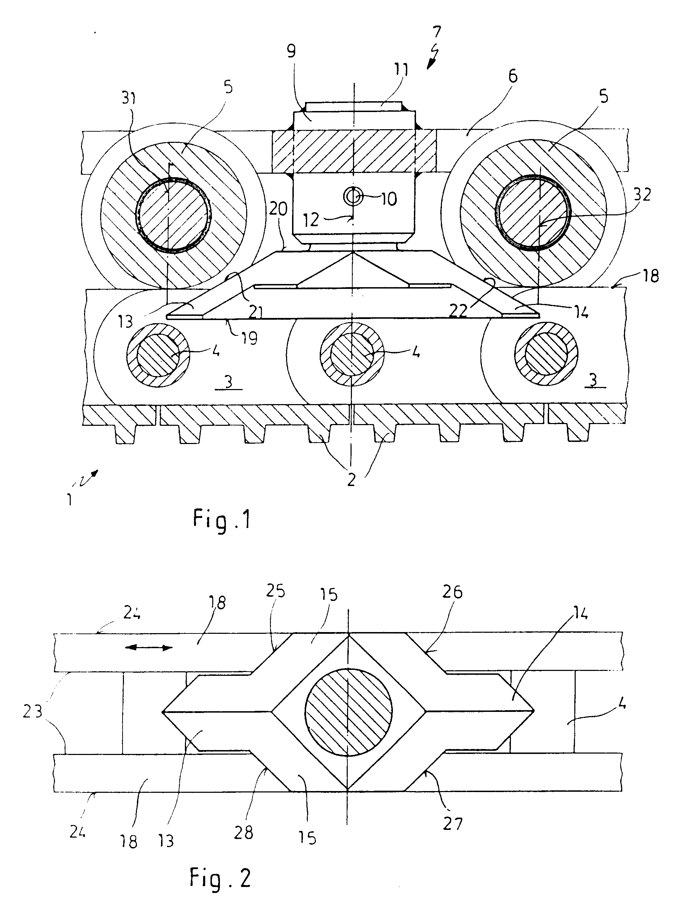

- Figuren 1 bis 3 -: verschiedene Ansichten des mit dem Raupenfahrwerk eines Raupenfahrzeuges zusammenwirkenden Kettenräumers.

In den Figuren 1 bis 3 ist in verschiedenen Ansichten ein Teil des Untertrums eines Raupenfahrwerkes 1 für ein Raupenfahrzeug dargestellt. Erkennbar sind die mit den einzelnen Bodenplatten 2 zusammenwirkenden Kettenglieder 3, die über Kettenbolzen 4 gelenkig miteinander verbunden sind. Oberhalb der Kettenglieder 3 sind die sogenannten Laufrollen 5 drehbar verlagert. Zwischen dem Untertrum 1 und dem nicht weiter dargestellten Obertrum des Raupenfahrwerkes 1 ist ein starrer Rahmen 6 vorgesehen, der über nicht weiter dargestellte Bauteile mit dem Unterwagen, beispielsweise eines Hydraulikbaggers, verbunden ist. Die Laufrichtung des Raupenfahrwerkes 1 ist durch den in Figur 2 dargestellten Pfeil verdeutlicht. Um nun ein Festsetzen von Erdreich, Schneematsch, Eis oder anderweitigem Schmutz im Bereich zwischen den Kettengliedern 3 sowie der Bolzen 4 möglichst bereits in der Entstehensphase zu verhindern, ist ein Kettenräumer 7 vorgesehen, der in diesem Fall sowohl im Bereich des nicht weiter dargestellten Ketten- als auch des nicht weiter dargestellten Leitrades jeweils zwischen zwei Laufrollen 5 angeordnet ist. Der erfindungsgemäße Kettenräumer 7 ist mit einem bolzenförmigen Ansatz 8 versehen, der innerhalb einer mit dem Rahmen 6 verschweißten Hülse 9 geführt ist und gegen versehentliches Herausrutschen aus der Hülse 9 durch einen Spannstift 10 gesichert ist. Zur Vermeidung des Schmutzeintrittes von oben in den Bereich der Hülse 9, ist diese mittels eines Deckels 11 verschlossen. Der Kettenräumer 7 ist als Gußteil aus einem hoch verschleißfesten Werkstoff (z.B. 28 CrSiMo 865) gebildet. Der Kettenräumer 7 ist, bezogen auf seine Mittelachse 12, symmetrisch aufgebaut und ist mit zwei, in der Draufsicht gesehen, keilförmig zulaufenden Schneiden 13,14 ausgestattet. In der Seitenansicht gesehen, ist der Kettenräumer 7 etwa pyramidenstumpfförmig aufgebaut und bildet in seinem mittleren Bereich ein etwa T-förmiges Profil 15, dessen sich nach außen erstreckende Bereiche 16,17 zumindest teilweise auf der ihnen zugewandten Oberfläche 18 der Kettenglieder 3 zur Anlage kommt.

Die Schneiden 13,14 erstrecken sich, ausgehend von dem T-förmigen Profil 15, unter seitlichem Abstand zwischen die Kettenglieder 3, wobei zwischen den Kettenbolzen 4 und der unteren Fläche 19 des Kettenräumers 7 ein vorgegebener Spalt erhalten bleibt. Die zwischen dem oberen Bereich 20 des Kettenräumers 7 und den jeweiligen Schneiden 13,14 sich erstreckenden Stirnflächen 21,22 verlaufen im Bereich der zugehörigen Laufrollen 5 unter einem vorgegebenen Winkel. Im Übergang der Endbereiche 13,14 in das T-formige Profil 15 sind die Bereiche 16,17 des T-förmigen Profils, ausgehend von den Innenkanten 23 bis hin zu den Außenkanten 24 der Kettenglieder 3, mit Materialleitflächen 25,26,27,28 versehen.

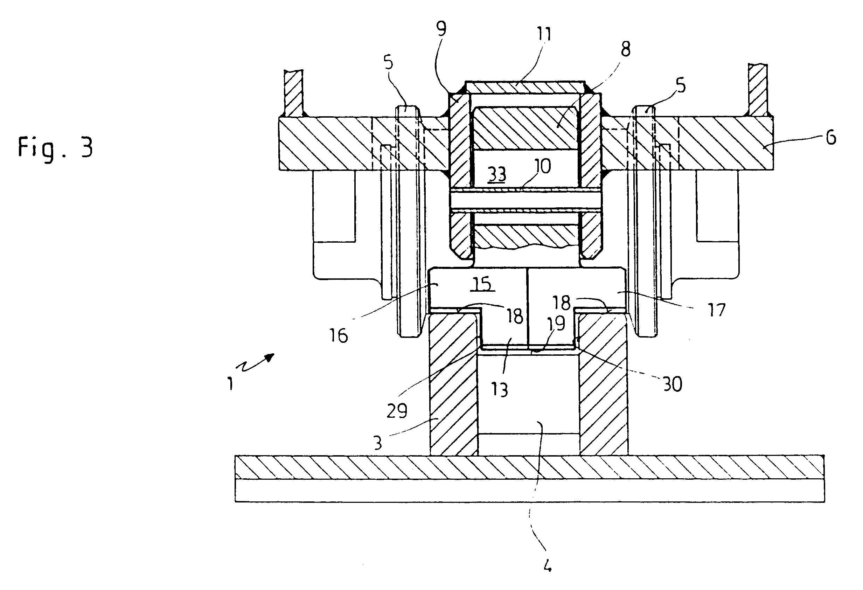

Wie dies insbesondere der Figur 3 zu entnehmen ist, liegen die Schneiden 13,14 zwischen den Schenkeln 29,30 der Kettenglieder 3 und dienen somit deren Führung, so daß die bislang zur Anwendung gekommenen seitlich von außen vor den Kettengliedern liegenden starren Führungselemente entbehrlich werden. Der Kettenräumer 7 schält somit einerseits das zwischen die Kettenglieder 3 gelangte und verfestigte Erdreich ab und leitet es nach außen und führt andererseits die Fahrkette, wobei infolge der axialen Beweglichkeit des bolzenförmigen Ansatzes 8 auch bei Kettenauslenkung ein ständiger Eingriff der Schneiden 13,14 zwischen den Schenkeln 29,30 der Fahrkette gewährleistet ist.

Wie dies insbesondere Figur 1 zu entnehmen ist, liegen die Spitzen der Schneiden 13,14 im wesentlichen in der Verlängerung der Laufrollenmittellinien 31,32, da im Hinblick auf die starre Anordnung der Laufrollen 5 bei Ausweichen der Bodenplatten 2 nach oben die Spitzen der Schneiden 13,14 nicht an den Kettenbolzen 4 zur Anlage kommen können.

Zur Herbeiführung der Auf- und Abbewegung des bolzenförmigen Ansatzes 8 weist dieser ein Langloch 33 auf, durch welches der Spannstift 10 hindurchgeführt ist. Die Länge des Langloches 33 bzw. die Lage des Spannstiftes 10 innerhalb des Langloches 33 ist bzw. sind so bemessen, daß es auch bei Einknicken oder Ausweichen der Bodenplatten 2 nach oben nicht zu Beschädigungen am Kettenräumer 7 bzw. den Laufrollen 5 oder den Kettengliedern 3 kommen kann.

## Patentansprüche

1. Raupenfahrzeug, wie insbesondere Hydraulik-, Schaufelradbagger oder dgl., mit um Leit- und Kettenräder sowie Lauf- und Stützrollen (5) geführten, mit Kettengliedern (3) versehenen spannbaren Fahrketten (1) sowie mindestens einem am Rahmen (6) der Fahrketten (1) gelagerten, sich bis in den Bereich der Kettenglieder (3) erstreckenden Kettenräumer (7), dadurch gekennzeichnet, daß der Kettenräumer (7) einen sich in Richtung des Rahmens (6) erstreckenden bolzenförmigen Ansatz (8) aufweist, der innerhalb einer mit dem Rahmen (6) fest verbundenen Hülse (9) axial beweglich geführt ist, und daß die Schneide bzw. die Schneiden (13 bzw. 14) des Kettenräumers (7) mit vorgegebenem Abstand oberhalb der Kettenbolzen (4) vorgesehen ist bzw. sind.

2. Raupenfahrzeug nach Anspruch 1, dadurch gekennzeichnet, daß der Kettenräumer (7) unter Eigengewicht auf der Oberfläche (18) der Kettenglieder (3) aufliegt.

3. Raupenfahrzeug nach Anspruch 1, dadurch gekennzeichnet, daß der Kettenräumer (7) unter Federkraft an die Oberfläche (18) der Kettenglieder (3) andrückbar ist.

4. Raupenfahrzeug nach einem der Ansprüche 1 bis 3, dadurch gekennzeichnet, daß der bolzenförmige Ansatz (8) innerhalb der Hülse (9) durch einen etwa horizontal sich erstreckenden Spannstift (10), Bolzen oder dgl. gesichert ist.

5. Raupenfahrzeug nach den Ansprüchen 1 bis 4, dadurch gekennzeichnet, daß der bolzenförmige Ansatz (8) des Kettenräumers (7), in Kettenlaufrichtung gesehen, etwa mittig zwischen zwei Laufrollen (5) vorgesehen ist.

6. Raupenfahrzeug nach den Ansprüchen 1 bis 5, dadurch gekennzeichnet, daß der Kettenräumer (7), in Draufsicht gesehen, im Bereich mindestens eines seiner freien Enden mit einer sich keilförmig verjüngenden Schneide (13 bzw. 14) ausgebildet ist.

7. Raupenfahrzeug nach Anspruch 6, dadurch gekennzeichnet, daß die Schneide (13 bzw. 14) mit seitlichem Abstand zwischen den Kettengliedern (3) vorgesehen ist.

8. Raupenfahrzeug nach den Ansprüchen 1 bis 7, dadurch gekennzeichnet, daß der Kettenräumer (7) außerhalb seiner Schneide (13 bzw. 14) im Querschnitt etwa T-förmig (15) ausgebildet ist, wobei die sich nach außen erstreckenden Bereiche (16,17) des T-Profils (15) zumindest teilweise an den korrespondierenden Kettengliedern (3) zur Anlage kommen.

9. Raupenfahrzeug nach den Ansprüchen 1 bis 8, dadurch gekennzeichnet, daß die der jeweiligen Laufrolle (5) zugewandte Stirnfläche (21,22) des Kettenräumers (7), ausgehend von dessen zugehöriger Schneide (13 bzw. 14), in der Seitenansicht gesehen, unter einem vorgegebenen Winkel in Richtung des T-förmigen Profils (15) verläuft.

10. Raupenfahrzeug nach den Ansprüchen 1 bis 9, dadurch gekennzeichnet, daß die oberhalb der Kettenglieder (3) vorgesehenen Bereiche (16,17) des T-Profils (15) mindestens eine unter einem vorgegebenen Winkel von der Innen- (23) zur Außenkante (24) der Kettenglieder (3) verlaufende Materialleitfläche (25,26,27,28) aufweisen.

11. Raupenfahrzeug nach den Ansprüchen 1 bis 10, dadurch gekennzeichnet, daß die Schneiden (13,14), die Stirnflächen (21,22), die Materialleitflächen (25-28) sowie alle anderen Flächen des Kettenräumers (7), bezogen auf den bolzenförmigen Ansatz (8) bzw. dessen Mittellinie (12), im wesentlichen symmetrisch zueinander angeordnet sind.

12. Raupenfahrzeug nach den Ansprüchen 1 bis 11, dadurch gekennzeichnet, daß die Spitzen der Schneiden etwa in der Verlängerung der vertikalen Mittellinien (31,32) der Laufrollen (5) enden.

13. Raupenfahrzeug nach den Ansprüchen 1 bis 12, dadurch gekennzeichnet, daß jeweils ein Kettenräumer (7) im Bereich eines Fahrkettenuntertrums (1) vor dem Kettenrad angeordnet ist.

14. Raupenfahrzeug nach den Ansprüchen 1 bis 13, dadurch gekennzeichnet, daß jeweils ein Kettenräumer (7) im Bereich eines Fahrkettenuntertrums (1) sowohl vor dem Kettenrad als auch vor dem Leitrad angeordnet ist.

15. Raupenfahrzeug nach den Ansprüchen 1 bis 14, dadurch gekennzeichnet, daß der Kettenräumer (7) aus einem hoch verschleißfesten Werkstoff, insbesondere aus 28 CrSiMo 865 besteht.

16. Raupenfahrzeug nach den Ansprüchen 1 bis 15, dadurch gekennzeichnet, daß der Kettenräumer (7) als Gußteil ausgebildet ist.

## Claims

1. Crawler-mounted vehicle, especially, for example, a hydraulic or bucket wheel excavator or the like, having tensionable tracks (1) which are guided round guide and chain wheels and also guided round running and support rollers (5), and are provided with chain links (3), and having further at least one chain cleaner (7) which is mounted on the frame (6) of the tracks (1) and extends into the region of the chain links (3), characterized in that the chain cleaner (7) has a bolt-like extension (8) which extends in the direction of the frame (6) and which is mounted so as to be axially movable within a sleeve (9) rigidly connected to the frame (6), and that the cutting edge or cutting edges (13 and/or 14) of the chain cleaner (7) is, or are, provided at a predetermined distance above the pins (4) of the chain.

2. Crawler-mounted vehicle according to Claim 1, characterized in that the chain cleaner (7) bears under its own weight on the surface (18) of the chain links (3).

3. Crawler-mounted vehicle according to Claim 1, characterized in that the chain cleaner (7) is arranged to be pressed under spring force against the surface (18) of the chain links (3).

4. Crawler-mounted vehicle according to one of Claims 1 to 3, characterized in that the bolt-like extension (8) is secured within the sleeve (9) by means of a holding pin (10), bolt or the like extending approximately horizontally.

5. Crawler-mounted vehicle according to Claims 1 to 4, characterized in that the bolt-like extension (8) of the chain cleaner (7), seen in the running direction of the chain, is provided approximately centrally between two running rollers (5).

6. Crawler-mounted vehicle according to Claims 1 to 5, characterized in that the chain cleaner (7), seen in plan view, has, in the region of at least one of its free ends, a cutting edge (13 or 14) which tapers in a wedge-shape.

7. Crawler-mounted vehicle according to Claim 6, characterized in that the cutting edge (13 or 14) is arranged, laterally offset, between the chain links (3).

8. Crawler-mounted vehicle according to Claims 1 to 7, characterized in that the chain cleaner (7) is approximately T-shaped (15) in cross-section outside its cutting edge (13 or 14), the outwardly extending regions (16,17) of the T-profile (15) coming to bear at least partially against the corresponding chain links (3).

9. Crawler-mounted vehicle according to Claims 1 to 8, characterized in that the end face (21,22), facing the respective running roller (5), of the chain cleaner (7), starting from its corresponding cutting edge (13 or 14), seen in side view, runs at a predetermined angle in the direction of the T-shaped profile (15).

10. Crawler-mounted vehicle according to Claims 1 to 9, characterized in that the regions (16,17) of the T-profile (15) which are provided above the chain links (3) have at least one material-guiding surface (25, 26, 27, 28) running at a predetermined angle from the inner edge (23) to the outer edge (24) of the chain links (3).

11. Crawler-mounted vehicle according to Claims 1 to 10, characterized in that the cutting edges (13,14), the end faces (21,22), the material-guiding surfaces (25-28) and all other surfaces of the chain cleaner (7) are arranged substantially symmetrically with respect to one another in relation to the bolt-like extension (8) or its centre line (12).

12. Crawler-mounted vehicle according to Claims 1 to 11, characterized in that the points of the cutting edges end approximately on the continuation of the vertical centre lines (31,32) of the running rollers (5).

13. Crawler-mounted vehicle according to Claims 1 to 12, characterized in that a respective chain cleaner (7) is arranged in the region of each lower track portion (1) in front of the chain wheel.

14. Crawler-mounted vehicle according to Claims 1 to 13, characterized in that a respective chain cleaner (7) is arranged in the region of a lower track portion (1) both in front of the chain wheel and in front of the guide wheel.

15. Crawler-mounted vehicle according to Claims 1 to 14, characterized in that the chain cleaner (7) consists of a highly wear-resistant material, especially of 28 CrSiMo 865.

16. Crawler-mounted vehicle according to Claims 1 to 15, characterized in that the chain cleaner (7) is in the form of a cast part.

## Revendications

1. Véhicule à chenilles, notamment une excavatrice hydraulique, une excavatrice à roue-pelle ou analogue, comportant des chenilles (1) qui peuvent être tendues, circulent autour de roues de guidage et de roues à chenille ainsi que sur des galets de roulement et de support (5), et pourvues de maillons (3), ainsi qu'au moins un élément (7) de raclage de chenille, qui est monté au moins sur le cadre (6) des chenilles (1) et s'étend au voisinage des maillons (3) des chenilles, caractérisé en ce que l'élément (7) de raclage de chenille possède un appendice saillant (8) en forme de boulon, qui s'étend dans la direction du cadre (6) et est guidé, de manière à être déplaçable axialement, à l'intérieur d'une douille (9) reliée rigidement au cadre (6), et que le ou les couteaux (13 ou 14) de l'élément (7) de raclage de chenille est ou sont prévus à une distance prédéterminée au-dessus du tourillon de chenille (4).

2. Véhicule à chenilles selon la revendication 1, caractérisé en ce que l'élément (7) de raclage de chenille s'applique, sous l'effet de son poids propre, sur la surface (18) des maillons (3) de la chenille.

3. Véhicule à chenilles selon la revendication 1, caractérisé en ce que l'élément (7) de raclage de chenille peut être repoussé, sous l'action de la force d'un ressort, contre la surface (18) des maillons (3) de la chenille.

4. Véhicule à chenilles selon l'une des revendications 1 à 3, caractérisé en ce que l'appendice saillant en forme de boulon (8) est bloqué à l'intérieur de la douille (9) par une tige de serrage (10), un boulon ou analogue, qui s'étend approximativement horizontalement.

5. Véhicule à chenilles selon les revendications 1 à 4, caractérisé en ce que l'appendice saillant en forme de boulon (8) de l'élément (7) de raclage de chenille est prévu, lorsqu'on regarde dans la direction de déplacement de la chenille, approximativement au centre entre deux galets de roulement (5).

6. Véhicule à chenilles selon les revendications 1 à 5, caractérisé en ce que l'élément (7) de raclage de la chenille est agencé de manière à présenter, lorsqu'on regarde selon une vue en plan, au niveau d'au moins l'une de ses extrémités libres, un couteau (13 ou 14), qui se rétrécit avec une forme en coin.

7. Véhicule à chenilles selon la revendication 6, caractérisé en ce que le couteau (13 ou 14) est situé à une distance latérale entre les maillons (3) de la chenille.

8. Véhicule à chenilles selon les revendications 1 à 7, caractérisé en ce que l'élément (7) de raclage de chenille est agencé approximativement avec une forme de T (15) en coupe transversale, en dehors de son couteau (13 ou 14), les parties (16,17) du profil en forme de T (15), qui s'étendent vers l'extérieur, viennent s'appliquer au moins en partie contre les maillons correspondants (3) de la chenille.

9. Véhicule à chenilles selon les revendications 1 à 8, caractérisé en ce que les surfaces frontales (21,22) de l'élément (7) de raclage de chenille, qui est tournée vers le galet de roulement respectif (5), sétendent sous un angle prédéterminé en direction du profil en forme de T (15), lorsqu'on regarde selon une vue en élévation latérale, à partir du couteau associé (13 ou 14) de l'élément de raclage de chenile.

10. Véhicule à chenilles selon les revendications 1 à 9, caractérisé en ce que les parties (16,17), prévues au-dessus des maillons (3) de la chenille, du profil en T (15) possèdent au moins une surface (25,26,27,28) de guidage de la matière, qui s'étend sous un angle prédéterminé depuis le bord intérieur (23) jusqu'au bord extérieur (24) des maillons (3) de la chenille.

11. Véhicule à chenilles selon les revendications 1 à 10, caractérisé en ce que les couteaux (13,14), les surfaces frontales (21,22), les surfaces (25-28) de guidage de la matière ainsi que toutes les autres surfaces de l'élément (7) de raclage de chenille sont disposées essentiellement d'une manière symétrique entre eux par rapport à l'appendice saillant en forme de boulon (8) ou à son axe médian (12).

12. Véhicule à chenilles selon les revendications 1 à 11, caractérisé en ce que les pointes des couteaux se terminent approximativement dans le prolongement des axes centraux verticaux (31,32) des galets de roulement (5).

13. Véhicule à chenilles selon les revendications 1 à 12, caractérisé en ce que respectivement un élément (7) de raclage de chenille est disposé au niveau d'un brin inférieur (1) de la chenille, en avant de la roue a chenille.

14. Véhicule à chenilles selon les revendications 1 à 13, caractérisé en ce que respectivement un élément (7) de raclage de chenille est disposé au niveau du brin inférieur (1) de la chenille aussi bien en avant de la roue à chenille qu'en avant de la roue de guidage.

15. Véhicule à chenilles selon les revendications 1 à 14, caractérisé en ce que l'élément (7) de raclage de chenille est réalisé en un matériau présentant une résistance élevée à l'usure, notamment en 28 CrSiMo 865.

16. Véhicule à chenilles selon les revendications 1 à 15, caractérisé en ce que l'élément (7) de raclage des chenilles est réalisé sous la forme d'une pièce moulée en fonte.
